# EUROPEAN PATENT APPLICATION

(11) **EP 1 125 980 A1**
(43) Date of publication of application: **22.08.2001**
(21) Application number: 99921244.2
(22) Date of filing: 25.05.1999
(51) Int. Cl.: C08L 23/12, C09D 123/12, C09D 5/00, D21H 19/20, D21H 27/00

(54) **WATER-DISPERSIBLE HOT-MELT COMPOSITION, MOISTUREPROOF PAPER MADE USING THE SAME, AND PROCESS FOR PRODUCING THE SAME**

(30) Priority: 22.07.1998 JP 20611298; 21.01.1999 JP 1276499; 20.04.1999 JP 11199599; 20.04.1999 JP 11199699
(71) Applicant: Goyo Paper Working Co. Ltd., Osaka-shi, Osaka-fu 559-0003 (JP)
(72) Inventor: SATO, Makoto, Goyo Paper Working Co., Ltd, Osaka-shi, Osaka 559-0003 (JP); NAKAMOTO, Michinori, Goyo Paper Working Co., Ltd, Osaka-shi, Osaka 559-0003 (JP); KAWAHARA, Hiroshi, Goyo Paper Working Co., Ltd, Osaka-shi, Osaka 559-0003 (JP); YAMAZAKI, Yukinobu, Goyo Paper Working Co., Ltd, Osaka-shi, Osaka 559-0003 (JP); OKAMURA, Hiroshi, Goyo Paper Working Co., Ltd, Osaka-shi, Osaka 559-0003 (JP); YOSHIDA, Takeshi, Goyo Paper Working Co., Ltd, Osaka-shi, Osaka 559-0003 (JP); TSUZUKI, Minoru, Goyo Paper Working Co., Ltd, Osaka-shi, Osaka 559-0003 (JP); OHARA, Shuzo, Goyo Paper Working Co., Ltd, Osaka-shi, Osaka 559-0003 (JP)
(74) Representative: VOSSIUS & PARTNER
(86) International application number: JP9902717
(87) International publication number: WO0005306

(57) **Abstract**

A water-dispersible hot-melt composition which comprises (A) 30 to 55 parts by weight of an amorphous poly(α-olefin), (B) 3 to 25 parts by weight of a tackifier, (C) 20 to 45 parts by weight of a wax, (D) 2 to 20 parts by weight of a polyolefin resin, and (E) 0 to 15 parts by weight of a compatibilizing agent [the sum of components (A), (B), (C), (D), and (E) is 100 parts by weight] . The hot-melt composition gives a paper having excellent water repellency and excellent moisture resistance.

## Description

### Technical Field

The present invention relates to a water-dispersible hot melt composition, to moisture-proof paper with excellent disaggregation made using the foregoing composition, and to a method for producing the foregoing moisture-proof paper.

### Background Art

Generally, as moisture-proof paper, paper coated with a polyolefin type resin such as polyethylene, polypropylene, and the like is well known and widely used. This moisture-proof paper laminated with such a polyolefin type resin not only has excellent moisture-proofness and processibility, but also is economical and remarkably excellent as moisture-proof paper.

On the other hand, from a view point of recycling property, that is, wastepaper regenerability, the mechanical strength of the laminated film of the moisture-proo layer is too high and therefore, a pulper to be employed in a process of regenerating paper and carrying out pulping cannot finely disperse the polyolefin type resin layer parted from the fibrous parts of the paper and leaves the resin layer as agglomerates and films, and they are stuck to a drying roll of a paper machine or adheres to the surface of regenerated paper or causes bleeding and surface roughness to thus make recycling of wastepaper impossible.

Further, in light of moisture-proof paper possible to be recycled being demanded, moisture-proof paper coated with an emulsion containing synthetic rubber latex and a wax emulsion has recently been proposed, and this moisture-proof paper is certainly excellent in moisture-proofness and also in recycling property as wastepaper.

However, since the coating liquid is an emulsion, large scale drying facilities are required to form the coating film and the productivity is inferior as compared with the case of laminating with a polyolefin type resin. In addition, with proceeding of the drying and the coating film of a moisture-proof layer, the moisture-proof paper is sometimes curled and the wax in the coating layer sometimes bleeds, and slippage sometimes occurs between moisture-proof papers. Consequently, the rear side of such emulsion-coated type moisture-proof paper cannot but be coated with a slippage-preventing agent for the purposes of preventing curling and slippage and that results in a problem that the number of processing steps increases. Moreover, in the case where the obtained moisture-proof paper is rolled like a coil, since the face of the moisture-proof layer is brought into contact with the opposed face (the rear side of the paper substrate) in which no moisture-proof layer is formed, the wax components contained in the moisture-proof layer are transferred to the opposed face and that possibly results in problems that slippage is considerably easily caused, that blocking occurs, and that printing with an aqueous ink is made impossible.

Furthermore, since the moisture-proof layer is formed on the surface of the emulsion-coated layer, for example, at the time of wrapping with an emulsion glue, the glue is repelled by the moisture-proof layer and kept from being applied or even in the case that the glue is applied, the glue cannot be stuck to the moisture-proof layer and consequently, the adhesivr strength scarcely stands for practical use. For that reason, only a hot melt glue is usable as an adhesive to be used for wrapping with such moisture-proof paper and the foregoing moisture-proof paper has a potential problem that the use of the foregoing moisture-proof paper is considerably limited.

Moreover, for the use of moisture-proof paper, also required is so-called poly-sandwiched type moisture-proof paper, which is composed of two or more sheets of paper substrates and a moisture-proof layer sandwiched as an interlayer between the substrates. In the case where such moisture-proof paper is required to have excellent moisture permeability while maintaining good disaggregation, it is often hardly possible to satisfy such requirements with a single moisture-proof layer with a thick thickness and therefore, hot-melt moisture-proof layers to be sandwiched as described above are sometimes layered in multilayers (paper/hot-melt moisture-proof layer/paper/hot-melt moisture-proof layer/paper, and so forth), or moisture-proof layers of a hot-melt composition are further formed on one or both sides of the outer surface of the paper substrates of the sandwich-like moisture-proof paper, too.

Nevertheless, with the above described emulsions, it is impossible to produce moisture-proof paper by sandwiching it between the inner faces of two sheets of paper. That is because, though such emulsions can be employed to form a moisture-proof layer with a high wax concentration on the surface layer, the moisture-proof layer is broken by sticking two sheets of moisture-proof paper by heat or an adhesive. Also in the case where two sheets are layered after application of an emulsion and before drying and then dried, a moisture-proof layer itself cannot be formed and consequently no moisture-proofness is provided.

Additionally, all types of the above described moisture-proof paper are considerably expensive in the present situation and practically scarcely used for general uses as moisture-proof paper except special use.

The present invention aims at solving such conventional drawbacks as described above and providing moisture-proof paper with excellence in moisture-proofness, recycling capability as wastepaper, economical property and productivity, further providing moisture-proof paper with improved preventive property against slippage and wax component transfer at the time of rolling, furthermore providing moisture-proof paper with improved adhesive property, and moreover providing poly-sandwiched type moisture-proof paper.

### Disclosure of the Invention

A first of the present invention is to provide a water-dispersible hot-melt composition comprising components (A) to (E) in 100 parts by weight as the sum of components (A), (B), (C), (D), and (E);
(A) 30 to 55 parts by weight of an amorphous poly (α-olefin),
(B) 3 to 25 parts by weight of a tackifier,
(C) 20 to 45 parts by weight of a wax,
(D) 2 to 20 parts by weight of a polyolefin type resin, and
(E) 0 to 15 parts by weight of a compatibilizing agent.

A second of the present invention is to provide moisture-proof paper comprising a paper substrate and a moisture-proof layer of the hot-melt composition formed on at least one side of the substrate.

A third of the present invention is to provide moisture-proof paper wherein a barrier coat layer is formed on the moisture-proof layer as described in the second invention.

A fourth of the present invention is to provide moisture-proof paper comprising two or more paper substrates sandwiching the hot-melt composition therebetween.

A fifth of the present invention is to provide moisture-proof paper, wherein, in the above-mentioned forth invention, a penetration proof layer is formed on the face of the paper substrates on which the hot-melt composition is to be applied and/or the face of counterpart paper substrates which is to be brought into contact with the hot-melt composition.

A sixth of the present invention is to provide a method for producing moisture-proof paper as described in the above-mentioned second invention, which comprises the step of forming a moisture-proof layer by applying the hot-melt composition to at least one side of a paper substrate.

A seventh of the present invention is to provide a method for producing moisture-proof paper as described in the above-mentioned third invention, which comprises the steps of forming a moisture-proof layer by applying the hot-melt composition to at Least one side of a paper substrate and further forming a barrier coat layer on the surface of the moisture-proof layer.

A eighth of the present invention is to provide a method for producing moisture-proof paper as described in the above-mentioned fourth invention, which comprises the step of applying the above-mentioned hot-melt composition to at least one face in the inner sides of two or more paper substrates.

A ninth of the present invention is to provide a method for producing moisture-proof paper as described in the above-mentioned fifth invention, which comprises the steps of applying a penetration proof agent to a face of the paper substrates to be coated with the hot-melt composition and/or to face of other counterpart paper substrates to be brought into contact with the hot-melt composition before the hot-melt composition is applied to the paper substrates in the above-mentioned eighth invention .

### Best Mode for Carrying out the Invention

The examples of (A) amorphous poly (α -olefin) to be employed for the present invention include non-crystalline olefin polymers such as a propylene homopolymer, a propylene-ethylene copolymer, a propylene-butene-1 copolymer, and the like. The molecular weight (weight average) of those polymers are preferably 100 to 120,000. In the case of less than 100 molecular weight, the moisture-proof layer is not provided with sufficient coating strength and sometimes bleeding of resin in a drying process of paper regeneration is caused. On the other hand, in the case of more than 120,000 molecular weight, the fluidity of the resin is deteriorated and an uniform moisture-proof layer is hardly formed to occasionally result in insufficient moisture-proofness. Those may be used solely or as a mixture of 2 or more.

The amount of an amorphous poly (α -olefin) to be used is 30 to 55 parts by weight, preferably 40 to 55 parts by weight. In the case of less than 30 parts by weight, the moisture-proofness is not only inferior, but the advantage in cost is lessened. In the case of more than 55 parts by weight, the moisture-proofness, the disaggregation, and the like are worsened.

By the way, a hot-melt composition to provide moisture-proofness has been widely used for wrapping in industrial fields. The hot-melt composition has, however, often been used as an adhesive to stick paper, paper board, and so forth and, therefore, has high adhesive property. For that reason, even if being applied to a paper substrate of moisture-proof paper while the adhesive property being suppressed, the hot-melt composition sometimes causes so-called blocking phenomenon that the front face and the rear face of the moisture-proof paper are stuck to each other when the moisture-proof paper is rolled and stored for a long period of time in rolled state.

Further, as described above, the face bearing the moisture-proof layer is brought into contact with the opposed face (the rear side of the paper substrate) where no moisture-proof layer is formed at the time when the moisture-proof paper is rolled into like a coil, and thus, the wax components in the moisture-proof layer transfer to the opposed face so that slippage extremely easily occurs.

From a view point of such blocking resistance and slippage resistance, a propylene homopolymer and a propylene-ethylene copolymer are especially preferable and their molecular weight (weight average) is preferably 10,000 to 120,000.

The examples of the (B) tackifier to be employed for the present invention include rosin, modified rosin, their ester compounds, alkylphenol resin, rosin- and alkylphenol-modified xylene resins, terpene phenol resin and the like as ones having a functional group, and terpene type resins, aliphatic hydrocarbon resins such as olefin type resins, aromatic hydrocarbon type resins such as styrene resins, aromatic petroleum resins, coumarone-indene resins, isoprene type resins, and the like as ones having no functional group. Any of those can be selected and those compounds may be used solely or as a mixture of 2 or more. Among them, especially preferable are aliphatic hydrocarbon type resins, aromatic hydrocarbon type resins, terpene type resins, and rosin type resins in terms of disaggregation property.

The amount of the tackifier to be used is 3 to 25 parts by weight. In the case of less than 3 parts by weight, the moisture-proofness is insufficient and in the case of more than 25 parts by weight, cracking occurs in the moisture-proof layer at the time of folding moisture-proof paper in cruciform shape and the moisture-proofness is deteriorated. Further, in terms of the foregoing slippage resistance and blocking resistance, the amount of the tackifier to be added is preferably about 3 to 10 parts by weight.

The (C) wax to be used for the present invention is broadly classified into two types: natural waxes and synthetic waxes and any one of waxes may be selected and they can be used either solely or as a mixture of two or more.

Examples of the natural waxes include paraffin waxes, microcrystalline waxes, montan waxes, carnauba waxes, candelilla waxes, and the like and examples of the synthetic waxes include polyethylene waxes, polypropylene waxes, and the like. They can be used either solely or as a mixture of two or more. A crystalline polyolefin type wax having a softening point of not lower than 105 °C is especially preferable from a viewpoint that it can provide excellent slippage resistance. The amount of the wax to be used is 20 to 45 parts by weight. In the case of less than 20 parts by weight, the moisture-proofness is insufficient and in the case of more than 45 parts by weight, bleeding occurs at the time of paper production after disaggregation and slippage resistance is also deteriorated.

As described above, the moisture-proof paper has a problem that the moisture-proof paper is difficult to be stuck with an adhesive at the time, for example, of being used for wrapping.

Adhesives are broadly classified into a hot-melt type glue and an emulsion/latex type glue. A synthetic rubber-based hot-melt type glue, does not cause adhesive failure at the time of wrapping but easily pollutes working environments. A hot-melt type based ethylene-vinyl acetate resin type glue sometimes has insufficient adhesive strength to a moisture-proof layer as compared with conventional polyethylene type moisture-proof paper, thought it depends on the ratio in the composition and the types of additives.

On the other hand, regarding the emulsion/latex type glue, the conventionally used and economical vinyl acetate resin type emulsion glue cannot provide adhesive strength in the case of adhesive of moisture-proof paper capable of disaggregation and is often useless. Further, the vinyl acetate resin type emulsion glue is repelled on the moisture-proof layer surface and in some cases it cannot even be applied.

Such problems as described above can be solved by using a wax component of a hot-melt composition in combination with an oxidized wax and/or an acid-modified wax. Consequently, the adhesive strength between a moisture-proof layer and a paper substrate is improved, the adhesive strength between a moisture-proof layer and glue for wrapping is improved, and the adhesive strength to an overcoat agent such as a barrier coat layer is improved, and the quality of moisture-proof paper can be stabilized and at the same time economical glue for wrapping is made usable.

The oxidized wax and the acid-modified wax to be employed for the present invention are waxes which are oxidized or into which acid residue groups such as carboxyl and the like are introduced by chemical reactions. Oxidized waxes and acid-modified waxes produced by chemical reactions of polyethylene wax, polypropylene wax, Fischer-Tropsch wax are preferable and they may be used solely or as a mixture of two or more of them. The amount of the oxidized wax and/or the acid-modified wax to be used may be 0.1 to 20 parts by weight in 20-45 parts by weight of the waxes in terms of effects of suppressing deterioration of moisture-proofness and improving the adhesive property.

Examples of the (D) polyolefin type resin to be used for the present invention are preferably those which are injection-moldable with 10,000 to 50,000 molecular weight (number average). In the case of less than 10,000 molecular weight, heat resistance is insufficient at the time of paper production after disaggregation and in the case of more than 50,000, it becomes difficult for the hot-melt composition to be melted and mixed well.

The amount of the polyolefin type resin to be used is 2 to 20 parts by weight. In the case of less than 2 parts by weight, the foregoing heat resistance is insufficient and in the case of more than 20 parts by weight, cracking easily occurs in the moisture-proof layer at the time of folding the moisture-proof paper into a cruciform shape and the moisture-proofness is deteriorated. Among polyolefin type resins, a polypropylene type resin is preferably used from a viewpoint that the resin has good heat resistance and compatibility.

Examples of the (E) compatibilizing agent include polyolefin resins such as a polypropylene grafted with an acid component such as maleic anhydride or the like, a low crystalline ethylene-propylene copolymer, an ethylene-vinyl acetate copolymer, an ethylene-(meth)acrylic acid (ester) copolymer, and the like and those having a molecular weight (number average) within 10,000 to 50, 000 are preferable to be used. In the case that the molecular weight is less than 10,000, the foregoing heat resistance is insufficient and in the case that the molecular weight is more than 50,000, the compatibilizing effect is deteriorated. Those compounds may be used solely or in combination of two or more.

The amount of the compatibilizing agent to be used is 0 to 15 parts by weight. If the amount is 0 part by weight, the moisture-proofness-improving effect is sometimes insufficient, though that case is practically possible, and thus, the amount is preferably 1 to 7 parts by weight. In the case of more than 15 parts by weight, the thermal stability of the hot-melt composition is worsened and the moisture-proofness is deteriorated.

In the present invention, the sum of the amounts of the respective components (A) to (E) is 100 parts by weight.

In the case where moisture-proof paper capable of disaggregation is regenerated as wastepaper, the foregoing moisture-proof paper is thrown to a pulper in the same manner as in the case of other wastepaper regeneration and dispersed into pulps by mechanical stirring in an aqueous suspension state. At that time, if the specific gravity of the moisture-proof layer is less than 1, the resin composition parted from the paper substrate floats up in water and possibly gathers in a stagnation part or the like of the paper machine and forms agglomerates together with other impurities to generate defects in regenerated paper.

That problem can be solved by making the specific gravity of the moisture-proof paper layer 1.0 or higher by adding an inorganic filler to the hot-melt composition of the present invention. In other words, the mixing property with pulp in the aqueous suspension state is improved and as a result, the resin composition floating up in water can remarkably be decreased to prevent the quality deterioration of the resultant regenerated paper. In the future, for the purposes of saving resources and preserving environments, it is of great worth to prevent the deterioration of the quality of regenerated paper in the present situation that more and more large quantity of moisture-proof paper capable of disaggregation is supposedly utilized and recycled as wastepaper.

In the present invention, the inorganic filler is not specifically limited to be added to the hot-melt composition to keep the specific gravity 1.0 or higher. In general, most of inorganic fillers have the specific gravity of 2.4 or higher and in that case, the amount of an inorganic filler to be used is about 5 parts by weight to 100 parts by weight of the hot-melt composition. Though the upper limit of the specific gravity of the hot-melt composition is not specifically limited, it is preferable to control the addition amount of the filler to not more than 20 parts by weight since if the specific gravity is too high, the mixing property with pulp in aqueous suspension state is rather deteriorated. There are inorganic fillers such as calcium carbonate with spherical shape, talc and mica with needle-like shape and flat flaky shape and all such kinds are usable. Proper ones may be selected among them based on the mixing and kneading suitability with the hot-melt composition.

The hot-melt composition of the present invention may be mixed further with a stabilizer such as an oxidation-preventing agent and an additive such as a viscosity-adjusting agent.

The hot-melt composition of the present invention is applied to at least one side of a paper substrate. In the case of wrapping paper, the composition is formed only on one side of a paper substrate from a viewpoint of the necessity of adhesion at the time of wrapping. In the case where such adhesion is unnecessary but more improved moisture-proofness is required, the composition can be applied to both sides of a paper substrate.

The hot-melt composition is generally formed by application (coating). Though the amount of the composition to be applied may properly be determined according to the desired moisture-proofness, in general, about 10 to 50 g/m² is preferable.

As the method for applying the hot-melt composition to a paper substrate, those for using a roll coater, a slot orifice coater, an extrusion coater, and the like are exemplified but there is no limit and any method can be employed.

In the present invention, a barrier coat layer may be formed on a moisture-proof layer to prevent the substances contained in the moisture-proof layer from transferring to the outside of the moisture-proof layer and to provide blocking resistance and slippage resistance and at the same time to provide printability. As the barrier coat layer, preferable substances are, for example, an acrylic resin, a vinylidene chloride-acrylic copolymer resin, a chlorinated polyolefin, a polyamide resin, a nitrocellulose resin, a phenol resin, a polyurethane resin, and the like and they may be used solely or as a mixture of two or more. They may be formed into a plurality of layers using them solely or as a mixture of two or more. Further, additives such as inorganic substances, e.g. silica, titanium dioxide, talc, kaolin, calcium carbonate, surfactants, e.g. fatty acids and their salts, long chain hydrocarbon type paraffins, and waxes, may be added to the foregoing resins so as to strengthen the effect of preventing the deterioration of the slippage resistance and the effect of preventing blocking. In the case where a large quantity of a paraffin or a wax is used, the slippage resistance and the printability are worsened and therefore, the addition amount is preferably 1 to 10 parts by weight to 100 parts by weight of a resin.

A barrier coat Layer is formed by applying a solution or a dispersion containing those resins dissolved or dispersed in a variety of solvents. The proper coating amount is 0.1 to 3.0 g/m² and in the case of less than 0.3 g/m² , the effect of the barrier coat layer is insufficient and in the case of more than 30 g/m², not only the disaggregation is deteriorated, but also the cost increases and that is undesirable. The methods applicable for the coating method of the solution or the dispersion to moisture-proof paper are gravure printing, flexographic printing, relief printing, flat printing, screen printing methods, but the methods are not limited thereto and any method may be employed.

In the present invention, the foregoing hot-melt composition is inserted like a sandwich between paper substrates to provide polysandwiched type moisture-proof paper.

In this case, it is preferable to form a penetration proof layer by applying a penetration proof agent to one or both side faces of a paper substrate to be brought into contact with a hot-melt composition, that is, the face of the paper substrate on which the hot-melt composition layer is to be formed and/or the face of another counterpart paper substrate to be brought into contact with the hot-melt composition in order to prevent deterioration of moisture permeability and disaggregation caused by excess soaking of the hot-melt composition into the paper substrate at the time of sandwiching the composition between two paper substrates.

Examples of the penetration proof agent are aqueous polyvinyl alcohol solutions, solvent solutions of (meth)acrylic compounds, styrene-butadiene polymers, vinyl acetate type compounds, chlorinated polyolefins, and the like, emulsions of (meth)acrylic compounds, vinyl acetate type compounds, vinylidene chloride type compounds, and the like, and latex of such as SRB type and NBR type and they are used either solely or as a mixture of two or more.

To select the penetration proof agent, it is important for it to have excellent adhesive property to the hot-melt composition and as described before, the adhesive property is improved by using an oxidized wax or an acid residue-modified wax for the hot-melt composition and consequently the penetration proof agent can be selected from a wide range of options.

The amount of the penetration proof agent to be used is generally 0.1 to 20 g/m² and preferably 0.5 to 5 g/m² in terms of adhesive strength and the disaggregation.

Further, by mixing an inorganic filler to the penetration proof agent, the penetration proof agent resin component can be lessened and the filler is suppressed from penetrating into a paper substrate to heighten the effect of preventing penetration. A commonly used inorganic filler is usable as such an inorganic filler and the average particle diameter of the inorganic filler is preferably 2 µm or smaller. The addition amount of the pentration proof agent is preferably 20 to 200 parts by weight to 100 parts by weight of the penetration proof agent resin components.

In the case where a penetration proof layer is formed, prior to the application of the hot-melt composition, the penetration proof layer is formed by coating on the face of a paper substrate to be coated with the foregoing composition or the face of another counterpart paper substrate to be brought into contact with the foregoing composition or both of these faces.

Hereafter, the present invention will be described in detail with reference to examples, however the present invention is not at all limited to those examples.

In the following description, parts means parts by weight unless otherwise instructed.

### Example 1

A hot-melt composition was produced by heating at 180 to 190°C a composition comprising 47 parts of amorphous poly (α -olefin) (polypropylene homopolymer with molecular weight (weight average) of 70,000, APAO) as the (A) component, 15 parts of an aromatic modified terpene hydrocarbon resin (a C9 type aromatic compound) [125°C softening point, 1 or lower acid value, and 800 molecular weight (number average)] as the (B) component, 15 parts of polypropylene wax (C1) [154°C softening point, 1 or lower penetration, and 7,000 molecular weight (viscosity average)] and 15 parts of polyethylene wax (C2) [110°C melting point and 750 molecular weight (weight average)] as the (C) component, 5 parts of a polypropylene resin [MFR (230°C ) = 30 g/10 min, 157°C melting point, and 40,000 molecular weight (number average)] as the (D) component, 3 parts of maleic anhydride-modified polypropylene [40,000 molecular weight (number average), 154°C softening point, and 26 acid value] as the component (E), and 2 parts of a hindered phenol type oxidation preventing agent (110 to 125°C melting point) as a stabilizer and sufficiently stirring the resultant composition so as to uniformly disperse the respective components when all of these materials were dissolved.

The obtained hot-melt composition in melted state was applied to kraft paper of 75 g/m² thickness using a previously heated Meyer bar in 20 g/m² thickness.

The moisture permeability, disaggregation in water, and the friction coefficient of the obtained moisture-proof paper were measured by the following methods. As the results being shown in Table 1, the moisture permeability was as excellent as or even more excellent than that of moisture-proof paper coated with a polyolefin type resin in the case where this moisture-proof paper was formed into a flat type or folded into a cruciform shape. Also, the disaggregation in water was excellent and bleeding of the manufactured paper by heating was scarcely observed. Moreover, the friction coefficient was high as well and it was understood that no coating of the slippage preventing agent was necessary, unlike the emulsion-coated type moisture-proof paper.
(1) Moisture permeability
   The moisture permeability was measured based on a cup method (JIS Z 0208). The moisture permeability was measured for paper formed into a flat type and folded into a cruciform shape.
   Folding into a cruciform shape means folding the center of a paper specimen into a cruciform shape and forming the folding lines by reciprocating a roller of 3 Kg one time on the folded lines. The moisture permeability was then measured.
(2) Disaggregation
   Using a standardized pulp disaggregating apparatus made by Kumagai Riki Industrial Co., Ltd., the resin dispersibility of a pulp solution and the manufactured moisture-proof paper was determined by visual observation according to the following standards after specimens were cut into 1 to 1.5 cm square size and 40 g of the cut moisture-proof paper specimens (2% pulp concentration) was stirred in 2 L of water for 30 minutes.
   ○ : Existence of resin was scarcely observed in the manufactured paper.
   × : Adhesion or existence of resin which was not finely dispersed was observed in the manufactured paper.
      On the other hand, regarding the evaluation of bleeding, the occurrence of bleeding was judged by visual observation according to the following standards by heating the manufactured paper at 150 °C for 1 minute in a Geer's oven.
   ○ : Bleeding was scarcely observed.
   Δ : Bleeding was slightly observed and the surface area of the bleeding was less than 10%.
   × : Bleeding was considerably observed and the surface area of the bleeding was 10% or wider.
(3) Friction coefficient (JIS P 8147 horizontal method)

Specimens of kraft paper were fixed with an adhesive tape on a horizontal plate in a manner that wrinkling and loosening of the specimens were prevented. On the other hand, specimens of moisture-proof paper were firmly attached to a weight and both ends of each specimen were stuck to front and rear side faces of the weight by an adhesive tape in a manner that wrinkling and loosening of the slip face (the front face) were prevented to give specimens for weight. Then, the specimens for weight were slipped in about 10 mm at 30 mm/min pulling rate on the specimens of the kraft paper by a tensile strength testing apparatus to record the friction force between both specimens.
The evaluation faces: the coating face of the hot-melt composition vs. kraft paper and the rear side of the coating of the hot-melt composition vs. kraft paper.
The horizontal plate: about 75 mm width and 200 mm length
The weight: 60 mm width, 100 mm length, and 1000 g weight
The static friction coefficient: the ratio of the friction force inhibiting the initial movement of paper to the force vertically applied to paper.
The kinetic friction coefficient: the ratio of the friction force inhibiting the movement of moving paper to the vertically applied force.

### Comparative Example 1

A hot-melt composition and moisture-proof paper were produced in the same manner as in Example 1 except that the respective components of the composition were 52 parts of amorphous poly (α-olefin) as the (A) component, 15 parts of an aromatic modified terpene hydrocarbon resin as the (B) component, 15 parts of polypropylene wax (C1) and 15 parts of polyethylene wax (C2) as the (C) component, 3 parts of acid-modified polypropylene as the (E) component, and 2 parts of a hindered phenol type oxidation preventing agent as a stabilizer and the moisture permeability, disaggregation, and the friction coefficient were measured.

As the results being shown in Table 1, the moisture permeability in the flat shape and the cruciform shape was scarcely different as compared with the results of Example 1 and moisture proofness deterioration was scarcely observed, but the disaggregation in water was a little worsened and bleeding was also slightly observed.

### Comparative Example 2

A hot-melt composition and moisture-proof paper were produced in the same manner as in Example 1 except that the respective components of the composition were 52 parts of amorphous poly (α - olefin) as the (A) component, 16 parts of an aromatic modified terpene hydrocarbon resin as the (B) component, 16 parts of polypropylene wax (C1) and 16 parts of polyethylene wax (C2) as the component (C), and 2 parts of a hindered phenol, type oxidation preventing agent as a stabilizer, and the moisture permeability, disaggregation, and the friction coefficient were measured.

As the results being shown in Table 1, the moisture permeability in the flat shape and the cruciform shape was considerably high as compared with the results of Example 1, moisture-proofness deterioration was observed, the disaggregation in water was a little worsened and bleeding was increased. Comparative Example 3

Regarding moisture-proof paper coated, in an amount of 20 g/m² of solid matter, with an emulsion ( Saivinol made by Saiden Chemical Industry Co., Ltd.), which contains emulsified acrylic acid ester-styrene copolymer and a wax, the moisture permeability, the disaggregation, and the friction coefficient were measured .

As the results being shown in Table 1, as compared with those of moisture-proof paper coated with the hot-melt composition of the present invention, the moisture permeability was high, the moisture-proofness was low and the static friction coefficient and the kinetic friction coefficient were both low to show slippage tendency.

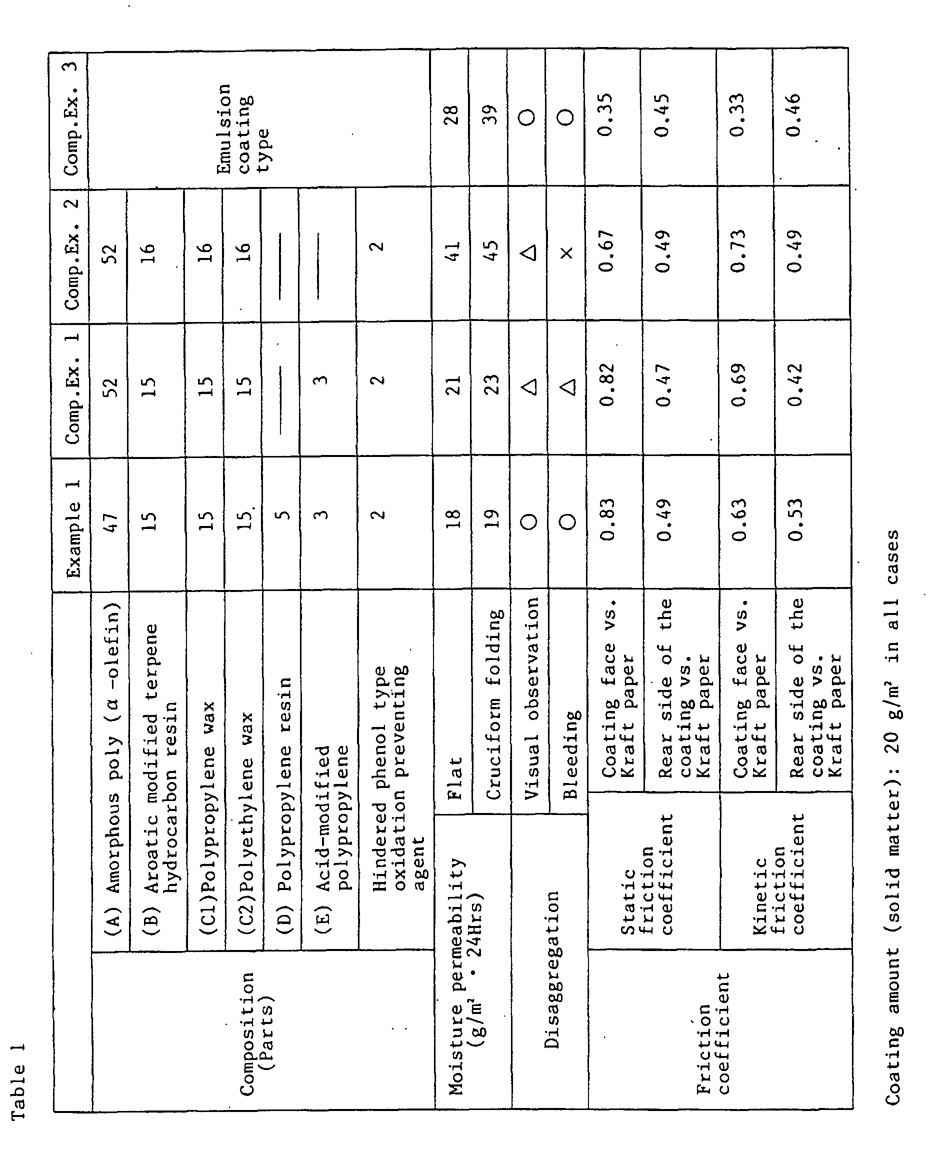

As apparent from Table 1, the moisture-proof paper using the hot-melt composition of the present invention had the moisture permeability as excellent as or even more excellent than that of moisture-proof paper coated with a polyolefin type resin and did not show deterioration of the moisture-proofness by folding and bending.

Also, the moisture-proof paper of the present invention had disaggregation and dispersibility in water as excellent as that of emulsion-coated type moisture-proof paper, which has recently been proposed and is possible to be recycled, and the moisture-proof paper of the present invention scarcely showed bleeding by heating after paper manufacturing, had a high friction coefficient, required neither to be coated with a slippage-preventing agent nor a drying process to eliminate probability of curling and was economical in terms of manufacturing facilities and its workability was high.

Further, from a viewpoint of cost, since an economical amorphous poly (α-olefin) is used as a main component, moisture-proof paper possible to be recycled can be provided at low cost.

### Example 2

A hot-melt composition was produced by heating at 190 to 200°C a composition comprising 39 parts of amorphous poly (α -olefin) (polypropylene homopolymer with molecular weight (number average) of 70,000 APAO) as the (A) component, 8 parts of a terpene-phenol copolymer resin (145°C softening point and 1 or lower acid value) as the (B) component, 35 parts of polypropylene wax (C1) [154°C softening point, 1 or lower penetration, and 19,000 molecular weight (viscosity average)] and 1 part of oxidized polypropylene wax (C2) [145°C softening point, 3,500 molecular weight (number average), 7 mg/g as KOH acid value] as the component (C), 14 parts of a polypropylene [MFR (230°C ) = 30 g/10 min, 157°C melting point, and 40,000 molecular weight (number average)] as the (D) component, 3 parts of maleic anhydride-modified polypropylene [40,000 molecular weight (number average), 154°C softening point, and 26 acid value] as the component (E), and 1 part of a hindered phenol type oxidation preventing agent (110 to 125 °C melting point) as a stabilizer, and sufficiently stirring the resultant composition so as to uniformly disperse the respective components when all of these materials were dissolved.

The obtained hot-melt composition in melted state was applied to kraft paper of 75 g/m² thickness using a previously heated Meyer bar in 20 g/m² thickness.

The moisture permeability, the disaggregation in water, the adhesive property, and the static friction coefficient of the obtained moisture-proof paper were measured by the following methods. As the results being shown in Table 2, the moisture permeability was as excellent as or even more excellent than that of polyethylene moisture-proofing paper. Also, the disaggregation in water was excellent and bleeding of the manufactured paper by heating was not observed. Further, regarding the adhesive property, both were excellent: the adhesive strength to a paper substrate at the time of using a hot-melt glue for wrapping and the adhesive strength to a hot-melt glue for wrapping. Moreover, though the adhesive strength to a vinylacetate resin type emulsion glue was slightly inferior to that to the hot-melt glue, it was sufficiently high to be practically used without a problem.
(1) Moisture permeability
   The moisture permeability was measured based on a cup method (JIS Z 0208). The folding into a cruciform shape was formed by folding the center of a paper specimen into a cruciform shape and forming the folding lines by reciprocating a roller of 3 Kg one time on the folded lines and then the moisture permeability was measured. In general, if the moisture permeability is 40 g/m²-24 hr or lower, the paper can be used as moisture-proof paper.
(2) Dissaggregation
   Using a standardized pulp disaggregating apparatus made by Kumagai Riki Industrial Co., Ltd., the resin dispersibility of a pulp solution and the manufactured moisture-proof paper was determined by visual observation according to the following standards after specimens were cut into 1 to 1.5 cm square size and 40 g of the cut moisture-proof paper specimens (2 % of pulp concentration) was stirred in 2 L of water for 30 minutes. The specific gravity was judged whether the hot-melt composition floated up or subsided in water by throwing solely the hot-melt composition into water at a room temperature.
   ⓞ : No resin floated in the pulp solution was observed and existence of resin was scarcely observed in the manufactured paper.
   ○ : Existence of resin was scarcely observed in the manufactured paper.
   × : Adhesion or existence of resin which was not finely dispersed was observed in the manufactured paper.
(3) Bleeding
   Regarding the evaluation of bleeding, the occurrence of bleeding was judged by visual observation based on the following standards by heating the manufactured paper at 150 °C for 1 minute in Geer's oven.
   ○ : Bleeding was not observed.
   Δ : Bleeding was slightly observed and the surface area of the bleeding was less than 5%.
   × : Bleeding was considerably observed and the surface area of the bleeding was more than 5%.
(4) Adhesion property to hot-melt glue for wrapping
   An ethylene-vinyl acetate resin type hot-melt glue for wrapping (S-Dine made by Sekisui Chemical Co., Ltd.) was heated to 180°C by a hot-melt gun and applied in 3 mm width to a moisture-proof layer. Immediately, the rear side of moisture-proof paper was overlaid on the coated face to stick the moisture-proof layer and the rear side of the paper. After the resultant glue was cooled to a room temperature, the adhesive strength was judged according to the following standards.
   ○ : The paper layer was broken and the adhesive strength was sufficient.
   Δ : The paper layer was partly broken but the adhesive strength was insufficient.
   × : The paper layer was scarcely broken and the adhesive strength was weak.
(5) Adhesion property to emulsion glue for wrapping
   A vinyl acetate resin type emulsion glue for wrapping (Bond made by Konishi Co., Ltd.) was applied thin to a moisture-proof layer at room temperature and then the rear side of moisture-proof paper was overlaid on the coated face. After the resultant moisture-proof paper was kept at room temperature and dried, the adhesive strength was judged according to the following standards.
   ○ : The paper layer was broken and the adhesive strength was sufficient.
   Δ : The paper layer was partly broken but the adhesive strength was insufficient.
   × : The paper was easily parted and was not stuck.
(6) Friction coefficient (JIS P 8147 horizontal method)
   Specimens of one test paper were fixed with an adhesive tape on a horizontal plate in a manner that wrinkling and loosening of the specimens were prevented. On the other hand, specimens of the other test paper were firmly attached to a weight and both ends of each specimen were stuck to front and rear side faces of the weight with an adhesive tape in a manner that wrinkling and loosening of the slip face (the front face) were prevented to give specimens for weight. Then, the specimens for weight were slipped in about 10 mm at 30 mm/min pulling rate on the counter part specimens by a tensile strength testing apparatus to record the friction force between both specimens.
   The evaluation faces:
   (a) the coating face of the hot-melt composition vs. the rear side of the coating (the paper rear face) (Example 2).
   (b) the barrier layer-coated face vs. the rear side of the coating of the hot-melt composition (the paper rear face) (Example 3).
   (c) the rear side of the coating of the hot-melt composition (the paper rear face) vs. the rear side of the coating (the paper rear face) (Examples 2, 3)
      The horizontal plate: about 75 mm width and 200 mm length
      The weight: 60 mm width, 100 mm length, and 1,000 g weight

   The static friction coefficient: the ratio of the friction force inhibiting the initial movement of paper to the force vertically applied to the paper.

### Example 3

A barrier coat layer was formed on the hot-melt composition coat layer of the moisture-proof paper produced by Example 2 by applying an acrylic resin solution (UV made by Nippon Shokubai Co., Ltd.) so as to control the resin amount to be 0.5 g/m². As shown in Table 2, the adhesive strength of the emulsion glue for wrapping was improved and especially the transition from the coat layer of substances contained in the hot-melt composition to the paper rear side was prevented and slippage resistance was provided, so that when the moisture-proof paper was used as moisture-proof wrapping paper, it was excellent and had no probability of luggage collapse.

### Examples 4, 5

Moisture-proof paper was produced in the same manner as in Example 2 using hot-melt compositions whose constituent compositions were changed as shown in Table 2 and the moisture permeability, the disaggregation, and the adhesive property were evaluated in the same manner as in Example 2.

The materials which were not used in Example 2 were as follows:
(B2) aromatic modified terpene hydrocarbon resin: 125°C softening point, 1 or lower acid value, and 800 molecular weight (number average).
(C3) oxidized polyethylene wax: 121°C melting point, 1.0 acid value, 0.96 density, and 4,000 molecular weight (viscosity average).
(C4) acid-modified polyethylene was: 107°C melting point, 30 acid value, 0.93 density, and 2,700 molecular weight (viscosity average).
Calcium carbonate: heavy calcium carbonate reagent first grade.

### Reference Example 1

A hot-melt composition and moisture-proof paper were produced using raw materials of Example 2 except that 36 parts of only polypropylene wax (C1) was used as the (C) component, without using oxidized polypropylene wax (C2), and the moisture permeability, the disaggregation, and the adhesive property were evaluated in the same manner as in Example 2.

As shown in Table 2, the moisture permeability, the disaggregation, and the bleeding property were good, but the adhesive property of the glue for wrapping was slightly insufficient. Reference Example 2, Comparative Example 4

Using hot-melt compositions produced by changing constituent compositions as shown in Table 2, moisture-proof paper was produced in the same manner as in Example 2 and the moisture permeability, the disaggregation, and the adhesive property were evaluated in the same manner as in Example 2. It is found that when oxidized wax and acid-modified polyethylene wax were not used, the moisture permeability, the disaggregation, and the bleeding property were good, but the adhesive property of the glue for wrapping was poor (Reference Example 2), and that when a prescribed amount of a tackifier was not used, the disaggregation was inferior and moisture-proof paper could not be recycled (Compartive Example 4).

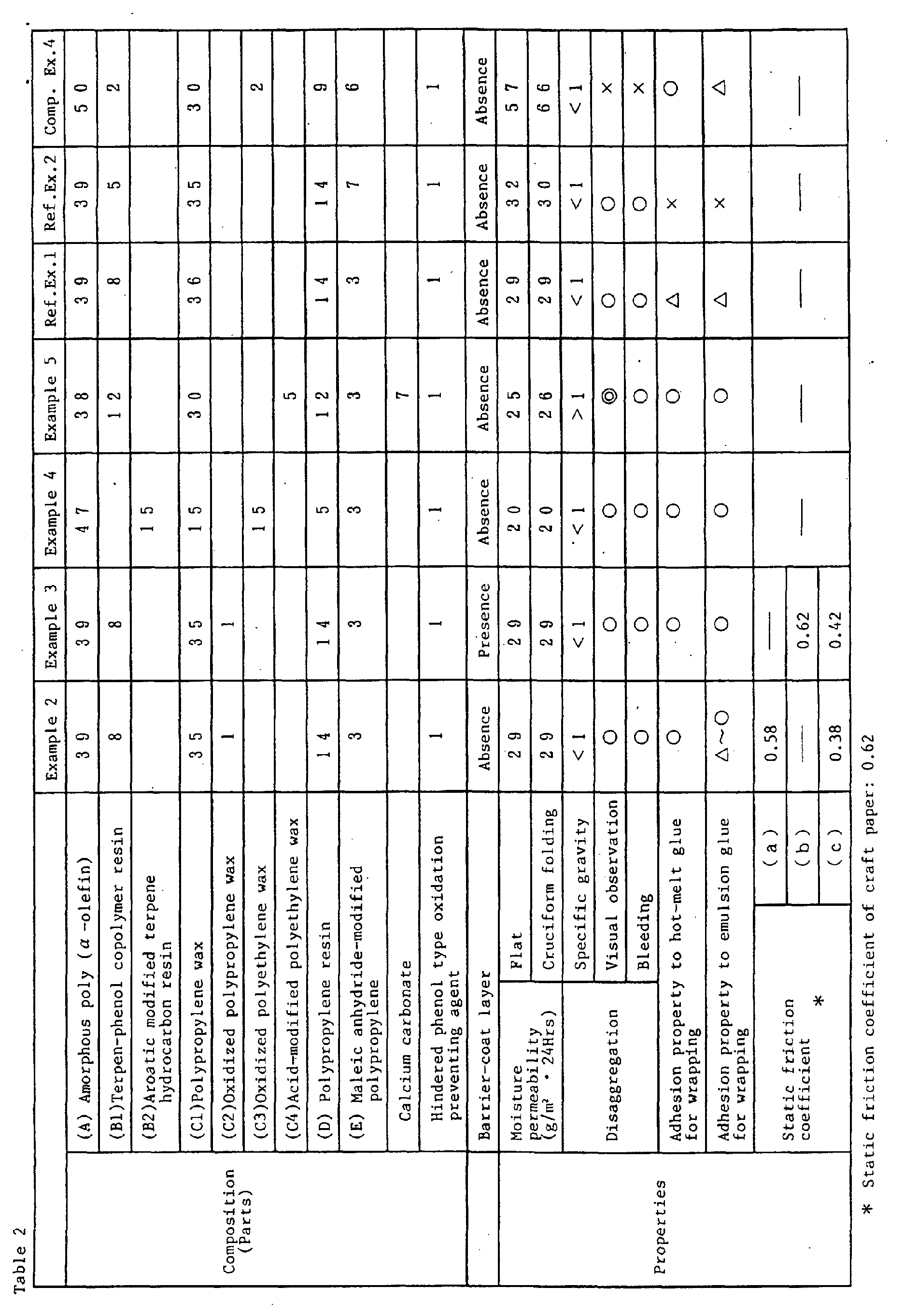

### Example 6

A hot-melt composition was produced by heating at 180°C a composition comprising 39 parts of amorphous poly (α-olefin) (A1) (polypropylene homopolymer with molecular weight (number average) of 70,000 APAO) as the (A) component, 7 parts of a terpene-phenol resin (B1) [145°C softening point, 2 or lower acid value, 1,000 molecular weight (number average)] as the (B) component, 36 parts of polypropylene wax (C1) [154°C softening point, 1 or lower penetration, and 19,000 molecular weight (viscosity average)] as the component (C), 14 parts of a polypropylene resin (D1) [MFR (230 °C ) = 55 g/10 min, 157°C melting point, and 40,000 molecular weight (number average)] as the (D) component, 3 parts of maleic anhydride-modified polypropylene (E1) [40,000 molecular weight (number average), 154°C softening point, and 26 acid value] as the component (E), and 1 part of a hindered phenol type oxidation preventing agent (110 to 125 °C melting point) as a stabilizer and sufficiently stirring the resultant composition so as to uniformly disperse the respective components when all of these materials were dissolved. The obtained hot-melt composition in melted state was applied to kraft paper of 75 g/m² thickness using a previously heated Meyer bar in 20 g/m² thickness to produce moisture-proof paper.

### Example 7

Moisture-proof paper was produced in the same manner as in Example 6 except that 8 parts of C₅ type hydrocarbon resin (B2) [100 °C melting point, 0.1 acid value, 1,050 molecular weight (number average)] was used as the (B) component, and that the amounts of the (D) component and (E1) component were changed to 16 parts and 0 part, respectively.

### Comparative Example 5

As shown in the Table 3, moisture-proof paper was produced in the same manner as in Example 6 except that the amounts of (A1), (B1), (C1), (D1), and (E1) were changed to 50 parts, 2 parts, 32 parts, 9 parts, and 6 parts, respectively.

### Comparative Example 6

As shown in the table 3, moisture-proof paper was produced in the same manner as in Example 6 except that 50 parts of amorphous poly (α -olefin) (A2) [propylene-butene-1 copolymer, 10,000 molecular weight (weight average) APAO) as the (A) component, 2 parts of (B2), 32 parts of (C1), 9 parts of polypropylene resin (D2) [MFR (230°C) = 45 g/10 min, 157°C melting point, 50,000 molecular weight (number average)] as the (D) component, and 6 parts of maleic anhydride-modified polypropylene (E2) (50,000 molecular weight(number average), 154°C softening point, and 26 acid value) as the (E) component were used.

### Comparative Example 7

As shown in Table 3, moisture-proof paper was produced in the same manner as in Example 6 except that 50 parts of amorphous poly ( α -olefin) (A3) [propylene-ethylene copolymer, 120,000 molecular weight (weight average) APA0) as the (A) component, 2 parts of hydrate rosin resin (B3) [90 °C softening point, 2-10 acid value, 1, 000 molecular weight (number average)] as the (B) component, 32 parts of polyethylene wax (C2) [105°C softening point, 3 penetration, 6,400 molecular weight (weight average)] as the (C) component, 9 parts of polypropylene resin (D3) [MFR (190°C) = 70 g/10 min, 102°C melting point, 10,000 molecular weight (number average)] as the (D) component, and 6 parts of maleic anhydride-modified polypropylene (E3) (10,000 molecular weight(number average), 108°C softening point, and 30 acid value) as the (E) component were used.

### Comparative Example 8

Moisture-proof paper was produced by applying, in an amount of 20 g/m² of solid matter, an emulsion ( Saivinol made by Saiden Chemical Industry Co., Ltd.), which contains emulsified acrylic acid ester-styrene copolymer and a wax.

Regarding the produced moisture-proof paper, the moisture permeability (moisture-proofness), the disaggregation, the slippage resistance, and the blocking resistance were measured by the methods described below.
(1) Moisture permeability (Moisture-proofness)
   Based on a cup method (JIS Z 0208), the moisture permeability was measured for paper formed into a flat type with the coated face being set to be the outside. As a standard, if the moisture permeability value was 40 g/m²-24 hr or lower, the moisture-proof paper was sufficient for practical use.
(2) Disaggregation
   Using a standardized pulp disaggregating apparatus made by Kumagai Riki Industrial Co., Ltd., the resin dispersibility of a pulp solution and manufactured paper was determined by visual observation according to the following standards after specimens, were cut into 1 to 1.5 cm square size and 40 g of the cut moisture-proof paper specimens (2% pulp concentration) was stirred in 2 L of water for 30 minutes.
   ○ : Existence of resin was scarcely observed in the manufactured paper.
   × : Adhesion or existence of resin which was not finely dispersed was observed in the manufactured paper.
(3) Slippage resistance
   Bleached kraft paper was fixed with an adhesive tape on a horizontal plate in a manner that wrinkling and loosening of the paper were prevented. On the other hand, specimens of moisture-proof paper were firmly attached to a weight and both ends of each specimen were stuck to front and rear side faces of the weight with an adhesive tape in a manner that wrinkling and loosening of the slip face (the front face) were prevented to give specimens for weight. Then, the specimens for weight of were slipped in about 200 mm at 300 mm/min pulling rate on specimens of the bleached kraft paper by a tensile strength testing apparatus. The friction force between the face of slipped bleached kraft paper and new bleached kraft paper which is not slipped was recorded and also the friction force between new bleached kraft papers which are not slipped and the friction force was recorded, and the difference of both was computed.
   The horizontal plate: about 75 mm width and 200 mm length
   The weight: 60 mm width, 100 mm length, and 1,000 g weight
   The static friction coefficient: the ratio of the friction force inhibiting the initial movement of paper to the force vertically applied to paper.
   The kinetic friction coefficient: the ratio of the friction force inhibiting the movement of moving paper to the vertically applied force.
(4) Blocking resistance
   After moisture-proof paper was dried at 50°C for 1 hour and cut into 5 cm× 5 cm size and respective cut specimens were overlaid while the moisture-proof layers being upside and pressurize at 6 kg/cm² for 15 minutes. Then, the adhesion state of the layered body was observed and evaluated according to the following standards.
   ○ : Specimens were easily parted.
   Δ : Though specimens were parted, parting was accompanied with crumping sound.
   × : Specimens were not parted.

As the results being shown in Table 3, all of the moisture-proofness, the disaggregation, the slippage resistance, and the blocking resistance were sufficiently satisfactory in Examples 6, 7 and the moisture-proofness of Example 6 which contained a compatibilizing agent as the (E) component was superior to that of Example 7 which did not contain a compatibilizing agent.

On the other hand, in the cases of Comparative Examples 5 to 7, owing to the deficiency of a tackifier, the moisture-proofness, the disaggregation, and the blocking resistance were inferior and the slippage resistance was insufficient. In the case of Comparative Example 8, which was of emulsion-coated type moisture-proof paper, the slippage resistance and the blocking resistance were insufficient.

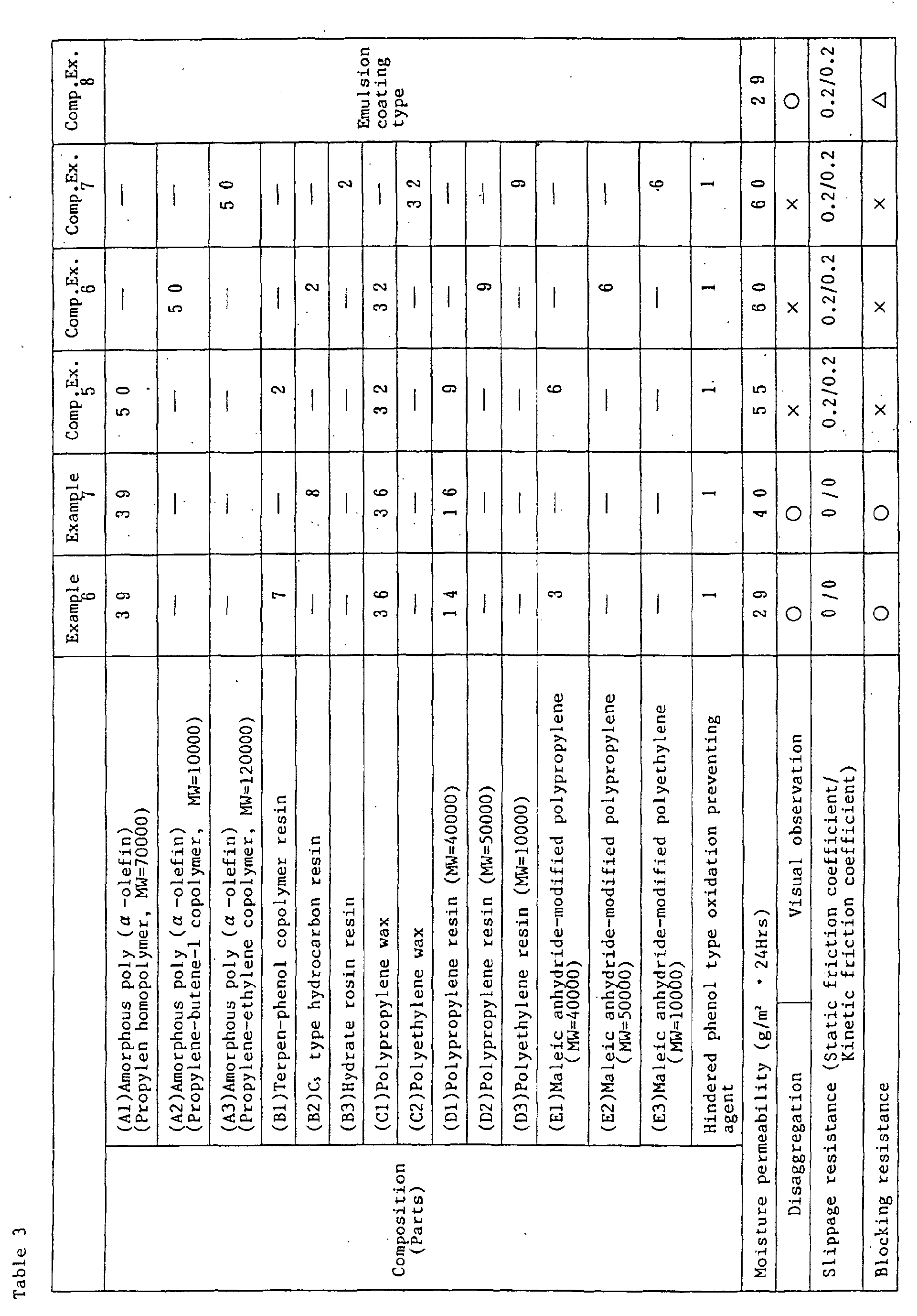

### Example 8

As shown in Table 4, moisture-proof paper was produced in the same manner as in Example 6 except that (A3), (B3), (C2) and (D3) were changed to 35 parts, 8 parts, 35 parts, and 18 parts, respectively and that 3 parts of an ethylene-acetic vinyl copolymer (E4) [75 °C softening point, 14000 molecular weight (viscocity average)] as the (E) component were used.

### Example 9

As shown in Table 4, moisture-proof paper was produced in the same manner as in Example 6 except that (A3), (B3), (C2) and (D3) were changed to 35 parts, 8 parts, 35 parts, and 18 parts, respectively and that 3 parts of an ethylene-propylene copolymer (E5) [MFR (230°C)=35g/10 min, 60°C Vicat softening point] as the (E) component were used.

### Example 10

As shown in Table 4, moisture-proof paper was produced in the same manner as in Example 6 except that (A2), (B2), (C1), (D2) and (E3) were changed to 45 parts, 3 parts, 40 parts, 9 parts and 2 parts, respectively.

### Reference Example 3

As shown in Table 4, moisture-proof paper was produced in the same manner as in Example 6 except that (A1), (B1), (C1) and (E3) were changed to 35 parts, 18 parts, 30 parts, 10 parts and 6 parts, respectively.

### Reference Example 4

As shown in Table 4, moisture-proof paper was produced in the same manner as in Example 6 except that (A3), (B3), (C2) and (D3) were changed to 44 parts, 23 parts, 22 parts, 6 parts and 4 parts, respectively.

### Reference Example 5

As shown in Table 4, moisture-proof paper was produced in the same manner as in Example 6 except that (A2), (B2), (C1), (D2) and (E2) were changed to 50 parts, 11 parts, 32 parts, 3 parts and 3 parts, respectively.

Regarding the produced moisture-proof paper, the moisture permeability (moisture-proofness), the disaggregation, the slippage resistance, and the blocking resistance were measured.

As the results being shown in Table 4, the moissture-proof papers obtained by Examples 8 - 10 are superior in moisture proofness, disaggregation, slippage registance and blocking resistance, but the moissture-proof papers obtained by Reference Examples 3 - 5 were inferior in slippage registance and blocking resistance because of increased amount of a tackifier of the (B) component, though excellent in moisture permeability and disaggregation.

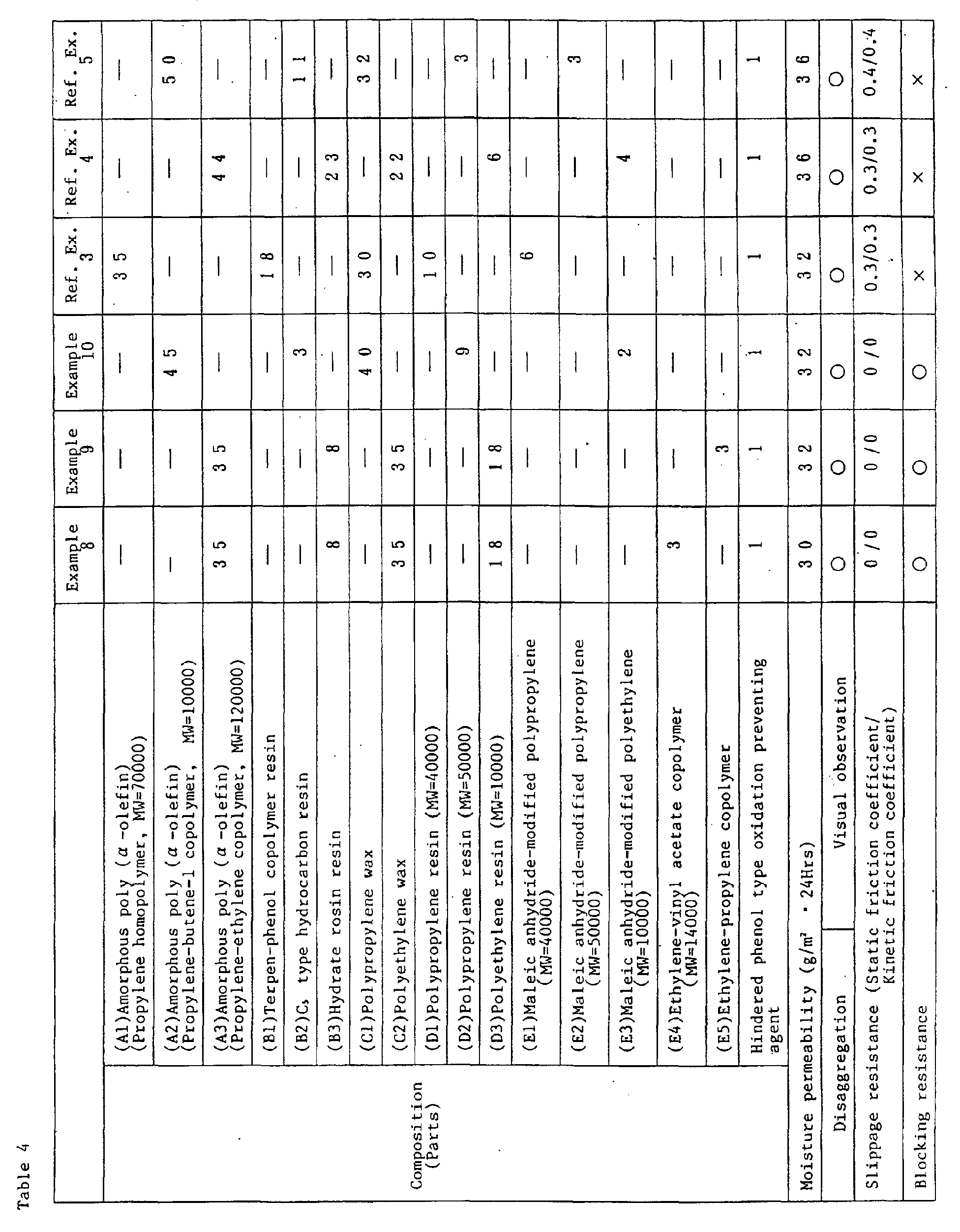

### Example 11

As shown in Table 5, moisture-proof paper was produced in the same manner as in Example 6 except that (A2), (B2), (C1), (D2) and (E2) were changed to 39 parts, 7 parts, 36 parts, 14 parts and 3 parts, respectively.

### Comparative Example 9

As shown in Table 5, moisture-proof paper was produced in the same manner as in Example 6 except that (A1), (B1), (C1), (D1) and (E1) were changed to 60 parts, 3 parts, 22 parts, 2 parts and 12 parts, respectively.

### Comparative Example 10

As shown in Table 5, moisture-proof paper was produced in the same manner as in Example 6 except that (A2), (B2), (C1), (D2) and (E2) were changed to 27 parts, 9 parts, 41 parts, 18 parts and 4 parts, respectively.

### Comparative Example 11

As shown in Table 5, moisture-proof paper was produced in the same manner as in Example 6 except that (A3), (B3), (C2), (D3) and (E3) were changed to 33 parts, 3 parts, 49 parts, 2 parts and 12 parts, respectively.

### Comparative Example 12

As shown in Table 5, moisture-proof paper was produced in the same manner as in Example 6 except that (A1), (B1), (C1), (D1) and (E1) were changed to 49 parts, 9 parts, 18 parts, 18 parts and 5 parts, respectively.

Regarding the obtained moisture-proof papers, the moisture permeability (moisture-proofness), the disaggregation, the slippage resistance, the blocking resistance were measured.

As the results being shown in Table 5, all of the moisture-proofness, the disaggregation, the slippage resistance, and the blocking resistance were sufficiently satisfactory in Example 11. On the other hand, in Comparative Example 9 the disaggregation and the blocking resistance were poor because of the increased amount of the (A) component, and in Comparative Example 10 the moisture-proofness and the blocking resistance were insufficient because of the decreased amount ot the (A) component. Moreover, in Comparative Example 11 the slippage resistance and the blocking resistance were poor because of the increased amount of the (C) component, and in Comparative Example 12 the moisture-proofness and the blocking resistance were insufficient because of the decreased amount ot the (C) component.

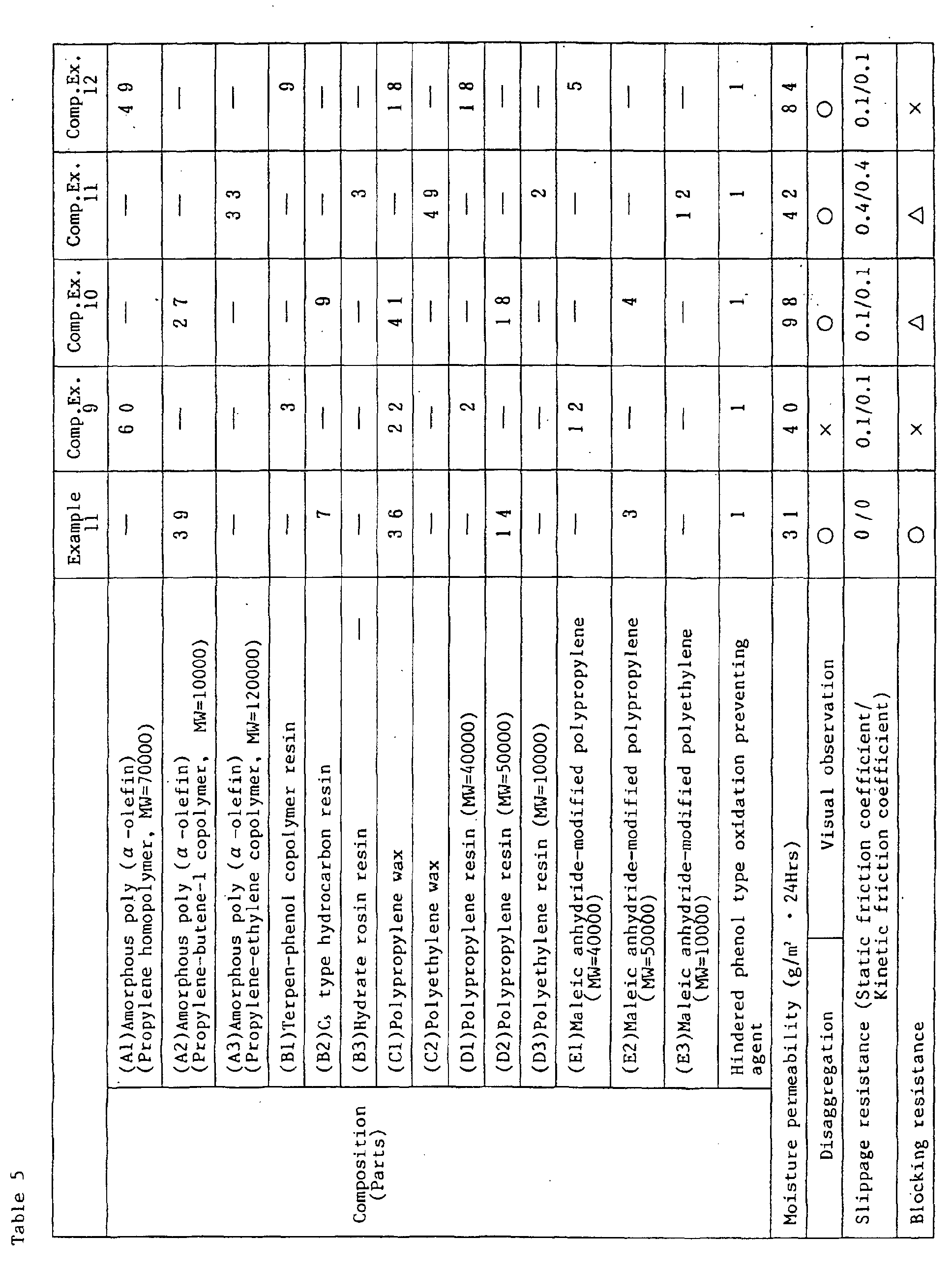

### Example 12

As shown in Table 6, moisture-proof paper was produced in the same manner as in Example 6 except that (A3),(B3),(C2),(D3) and (E3) were changed to 39 parts, 7 parts, 36 parts, 14 parts and 3 parts, respectively.

### Comparative Example 13

As shown in Table 6, moisture-proof paper was produced in the same manner as in Example 6 except that (A2), (B2), (C1), (D2) and (E2) were changed to 33 parts, 3 parts, 40 parts, 22 parts and 1 part, respectively.

### Comparative Example 14

As shown in Table 6, moisture-proof paper was produced in the same manner as in Example 6 except that (A3), (B3), (C2), (D3) and (E3) were changed to 49 parts, 5 parts, 41 parts, 1 part and 3 parts, respectively.

### Comparative Example 16

As shown in Table 6, moisture-proof paper was produced in the same manner as in Example 6 except that (A1), (B1), (C1), (D1) and (E1) were changed to 33 parts, 7 parts, 40 parts, 3 parts and 16 parts, respectively.

Regarding the obtained moisture-proof papers, the moisture permeability (moisture-proofness), the disaggregation, the slippage resistance, the blocking resistance were measured.

As the results being shown in Table 6, all of the moisture-proofness, the disaggregation, the slippage resistance, and the blocking resistance were sufficiently satisfactory in Example 12. On the other hand, in Comparative Example 13 the moisture-proofness and the blocking resistance were poor because of the increased amount of the (D) component, polyolefin type resin and in Comparative Examples 14 and 15 the moisture-proofness and the blocking resistance were insufficient because of the decreased amount of the (D) component in Comparative Example 14 and because of the increased amount ot the (E) component in Comparative Example 15.

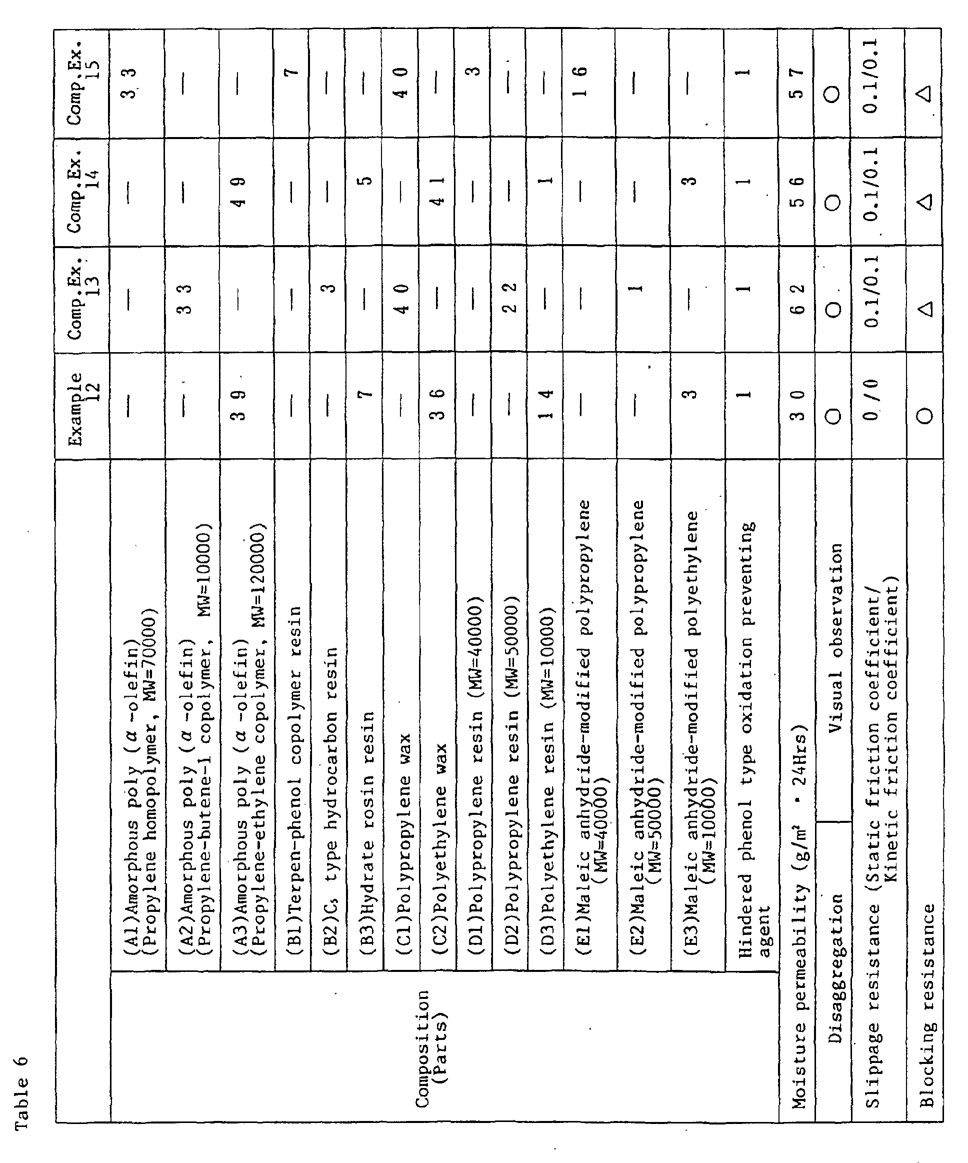

### Example 13

A hot-melt composition was produced by heating at 180 to 190°C a composition comprising 45 parts of amorphous poly (α -olefin) (polypropylene homopolymer with molecular weight (weight average) of 70,000, APAO) , 15 parts of an aromatic modified terpene hydrocarbon resin (a C9 type aromatic compound) [125°C softening point, 1 or lower acid value, and 800 molecular weight (number average)], 15 parts of polypropylene wax (C) [154°C softening point, 1 or lower penetration, and 7,000 molecular weight (viscosity average)] and 15 parts of polyethylene wax (D1) [110°C melting point and 750 molecular weight (weight average)], 5 parts of a polypropylene oligomer (D2) [MFR (230 °C ) = 30 g/10 min, 157°C melting point, and 40,000 molecular weight (number average)], 3 parts of maleic anhydride-modified polypropylene [40,000 molecular weight (number average), 154 °C softening point, and 26 acid value], and 2 parts of a hindered phenol type oxidation preventing agent (110 to 125 °C melting point) as a stabilizer and sufficiently stirring the resultant composition so as to uniformly disperse the respective components when all of these materials were dissolved.

The obtained hot-melt composition in melted state was applied to kraft paper of 75 g/m² thickness using a previously heated Meyer bar in 20 g/m² thickness.

A barrier coat layer was formed on the moisture-proof layer of the moisture-proof paper by applying an alcohol solution containing a water-soluble paint of an acrylic acid ester copolymer resin (Saivinol plastic film coat agent made by Saiden Chemical industry Co., Ltd.) using a Meyer bar and heating at 80°C for 1 minute so as to control the resin amount of 1.7 g/m².

### Example 14

Moisture-proof paper was produced in the same manner as in Example 13 except that a barrier coat layer was formed on the surface of the moisture-proof layer of the moisture-proof paper produced by Example 13 by applying a toluene solution of a chlorinated polyolefin resin using a Meyer bar and heating at 80°C for 1 minute so as to control the resin amount of 1.7 g/m².

### Example 15

Moisture-proof paper having a barrier coat layer was produced in the same manner as in Example 13 except that an emulsion (Saivinol made by Saiden Chemical Industry Co., Ltd.), which contains emulsified acrylic acid ester-styrene copolymer and wax, was applied instead of the hot melt composition to thus form the barrier coat layer.

### Example 16

Moisture-proof paper was produced in the same manner as in Example 13 except that a barrier coat layer was formed on the surface of the moisture-proof layer of the moisture-proof paper produced by Example 13 by applying an alcohol solution of an acrylic acid ester copolymer using a Meyer bar and heating at 80°C for 1 minute so as to control the resin amount of 3.2 g/m². Reference Example 6

Moisture-proof paper not having a barrier coat layer was produced in the same manner as in Example 13 except that an alcohol solution of an acrylic acid ester copolymer was not applied. Reference Example 7

Moisture-proof paper not having a barrier coat layer was produced in the same manner as in Example 15 except that an alcohol solution of an acrylic acid ester copolymer was not applied.

Regarding the obtained moisture-proof papers obtained by Examples 13 to 16 and Reference Examples 6 and 7, the moisture permeability, the disaggregation, the drop in friction coefficiency of PPC paper (transfer of the substances contained in the moisture-proof layer to PPC paper), the blocking resistance, and the printability (aqueous ink) were measured. The results are shown in Table 7.

The moisture permeability, the disaggregation, the drop in friction coefficiency of PPC paper (transfer of the substances contained in the moisture-proof layer to PPC paper), the blocking resistance and the printability (aqueous ink) were measured by the following methods.
(1) Moisture permeability
   The moisture permeability was measured based on a cup method (JIS Z 0208). The moisture permeability was measured for paper formed into a flat type and folded into a cruciform shape.
   Folding into a cruciform shape means folding the center of a paper specimen into a cruciform shape and forming the folding lines by reciprocating a roller of 3 Kg one time on the folded lines. The moisture permeability was then measured.
(2) Disaggregation
   Using a standardized pulp disaggregating apparatus made by Kumagai Riki Industrial Co., Ltd., the resin dispersibility of a pulp solution and manufactured moisture-proof paper was determined by visual observation according to the following standards after specimens were cut into 1 to 1.5 cm square size and 40 g of the cut moisture-proof paper specimens (2% pulp concentration) was stirred in 2 L of water for 30 minutes.
   ○ : Existence of resin was scarcely observed in the manufactured paper.
   Δ : Existence of resin which was finely dispersed was noticeably observed in the manufactured paper.
   × : Existence of resin which was not disaggregated was noticeably observed in the manufactured paper.
      Moreover, regarding the evaluation of bleeding, the occurrence of bleeding was judged by visual observation according to the following standards by heating the manufactured paper at 150°C for 1 minute in a Geer's oven.
   ○ : Bleeding was scarcely observed.
   × : Bleeding was considerably observed.
(3) Drop in friction coefficiency of PPC paper
   ① Transfer of the substances contained in the moisture-proof layer to PPC paper
      PPC paper was fixed on. a horizontal plate. On the other hand, specimens of the test paper were firmly attached to a weight with the moisture-proof layer to be outside and the specimens for weight were slipped on the PPC paper in about 100 mm at 30 mm/min pulling rate to thus cause substances contained in the moisture-proof layer to the PPC paper.
   ② Friction coefficient (JIS P 8147 horizontal method)
      The PPC paper to which the substances contained in the moisture-proof layer were transferred, obtained in the abov-ementioned ①, was fixed on a horizontal plate. On the other hand, specimens of unused PPC paper were firmly attached to a weight and the specimens for weight were slipped in about 100 mm at 30 mm/min pulling rate on the PPC paper to which the substances contained in the moisture-proof layer were transferred to thereby record the friction force between both specimens (1).
   ③ Drop in friction coefficient
      As a contrast, the friction force between unused papers was measured in the same manner as in the abovementioned ② and recorded (2).
      The drop in friction coefficient is represented by a difference between the above friction force (2) and the above friction force (1).
      In general, if the drop in friction coefficient is 0.2 or below, the moisture-proof paper is usable for wrapping PPC paper.
      The horizontal plate: 75 mm width and 200 mm length
      The weight: 60 mm width, 100 mm length, and 1,000 g weight
      The static friction coefficient: the ratio of the friction force inhibiting the initial movement of paper to the force vertically applied to the paper.
      The kinetic friction coefficient: the ratio of the friction force inhibiting the movement of moving paper to the vertically applied force.
(4) Blocking resistance
   Moisture-proof paper was cut into 5 cm× 5 cm size and respective cut specimens were overlaid so as to face the frontside and the backside of the moisture-proof layers and pressurized at 6 kg/cm² for 15 minutes. Then, the blocking state of the layered body was observed and evaluated according to the following standards.
   ○ : Specimens after pressurizing were freely slipped and no blocking was observed.
   × : Specimens after pressurizing were closely contacted with each other and they were parted with crumping sound.
(5) Printability (aqueous ink)
   Writability by a water-color pen on the surface of the moisture-proof paper was visually observed and evaluated according to the following standards.
   ○ : Writing is possible.
   × : Writing is impossible with the ink repelled.

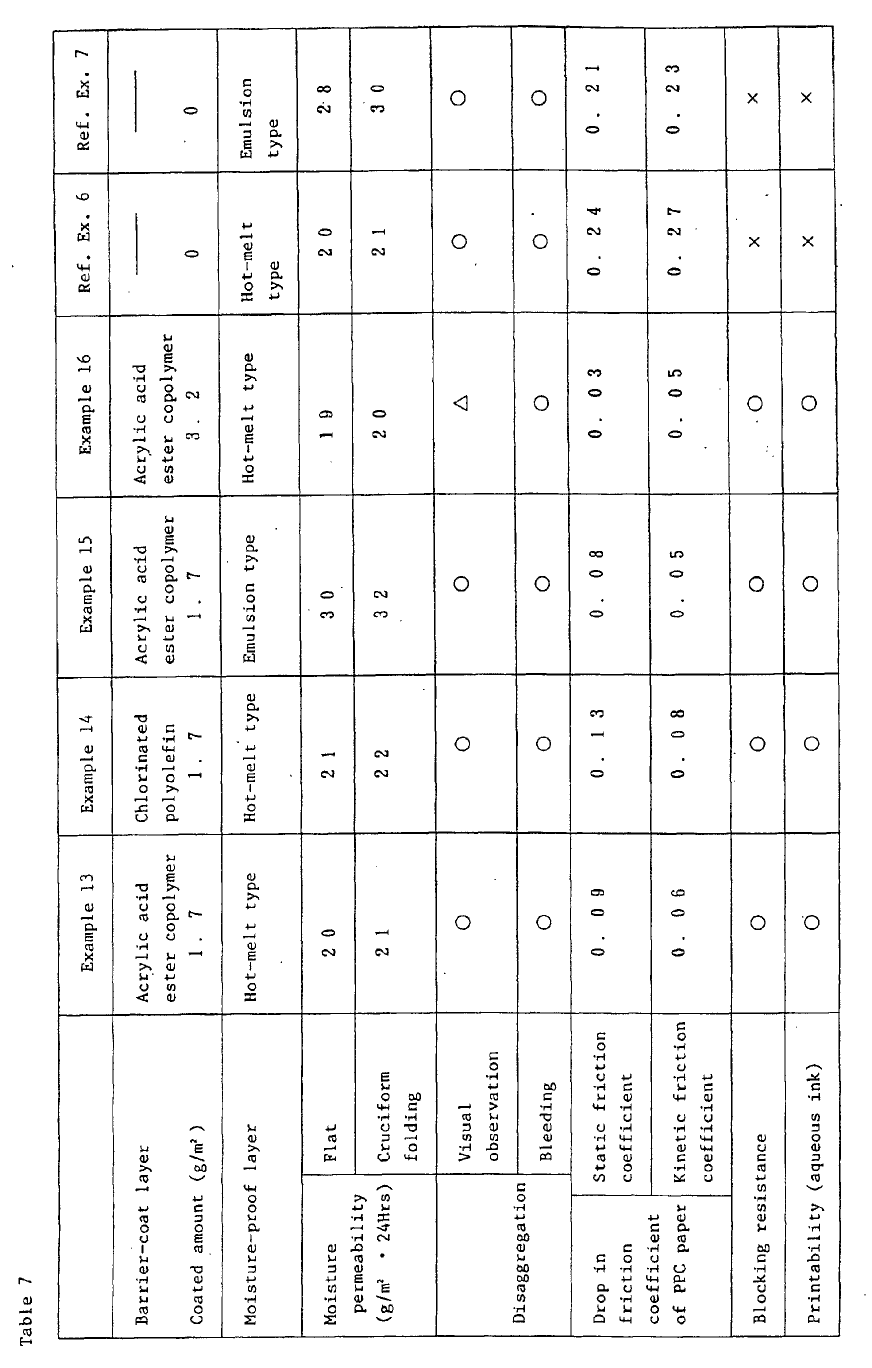

As shown in Table 7, moisture-proof papers having a barrier-coat layer (Examples 13 to 16) were good without varying the moisture permeability or the disaggregation, as compared with those having no barrier-coat layer (Reference Examples 6, 7), and prevented the slippage of paper caused by the transfer of substances contained in the moisture-proof layer, which is very important in usage such as individual package of copying paper like PPC and LPB.

Moreover, conventionally recyclable moisture-proof paper has drawbacks such as blocking and non-writing with an aqueous ink on the surface of the moisture-proof paper, but the moisture-proof paper having a barrier-coat layer eliminates such drawbacks and provides recyclable moisture-proof paper and wrapping paper having excellent surface properties.

### Example 17

A hot-melt composition was produced by heating at 180 to 190°C a composition comprising 47 parts of amorphous poly (α -olefin) (A1) (polypropylene homopolymer with molecular weight (weight average) of 70,000, APAO) as the (A) component, 15 parts of an aromatic modified terpene hydrocarbon resin (a C9 type aromatic compound) [125 °C softening point, 1 or lower acid value, and 800 molecular weight (number average)] as the (B) component, 15 parts of polypropylene wax (C1) [154°C softening point, 1 or lower penetration, and 7,000 molecular weight (viscosity average)] and 15 parts of polyethylene wax (C2) [121°C melting point and 1.0 mg/g acidic value as KOH, and 4,000 molecular weight (viscosity average)] as the (C) component, 5 parts of a polypropylene resin [MFR (230 °C) = 30 g/10 min, 157°C melting point, and 40,000 molecular weight (number average)] as the (D) component, 3 parts of maleic anhydride-modified polypropylene [40,000 molecular weight (number average), 154°C softening point, and 26 acid value] as the component (E), and 1 part of a hindered phenol type oxidation preventing agent (110 to 125 °C melting point) as a stabilizer and sufficiently stirring the resultant composition so as to uniformly disperse the respective components when all of these materials were dissolved.

The obtained hot-melt composition in melted state was applied to kraft paper of 75 g/m² thickness using a previously heated Meyer bar in 20 g/m² thickness, and immediately thereafter, another kraft paper is bought into contact with the applied surface and pressurized 5 kg/m² by a calender roll to thus obtain moisture-proof paper having a sandwiched hot-melt composition layer between the kraft papers. The obtained moisture-proof paper cannot be parted easily with hands.

The moisture permeability, disaggregation in water, and the friction coefficient of the obtained moisture-proof paper were measured by the following methods. As the results being shown in Table 8, the moisture-proofness was as excellent as or even more excellent than that of moisture-proof paper poly-sandwiched a polyolefin type resin in the case where this moisture-proof paper was formed into a flat type or folded into a cruciform shape. Also, the disaggregation in water was excellent and bleeding of the manufactured paper by heating was scarcely observed.
(1) Moisture permeability
   The moisture permeability was measured based on a cup method (JIS Z 0208). The moisture permeability was measured for paper formed into a flat type and folded into a cruciform shape.
   Folding into a cruciform shape means folding the center of a paper specimen into a cruciform shape and forming the folding lines by reciprocating a roller of 3 Kg one time on the folded lines. The moisture permeability was then measured. In general, if the moisture permeability is 40 g/m²-24 hr or lower, the paper can be used as moisture-proof paper.
(2) Dissaggregation
   Using a standardized pulp disaggregating apparatus made by Kumagai Riki Industrial Co., Ltd., the resin dispersibility of a pulp solution and manufactured moisture-proof paper was determined by visual observation according to the following standards after specimens were cut into 1 to 1.5 cm square size and 40 g of the cut moisture-proof, paper specimens (2 % of pulp concentration) was stirred in 2 L of water for 30 minutes.
   ○ : Existence of resin was scarcely observed in the manufactured paper.
   Δ : Existence of resin was considerably observed in the manufactured paper.
   × : Adhesion or existence of resin which was not finely dispersed was observed in the manufactured paper.
(3) Bleeding
   Regarding the evaluation of bleeding, the occurrence of bleeding was judged by visual observation based on the following standards by heating the manufactured paper at 150 °C for 1 minute in Geer's oven.
   ○ : Bleeding was not observed.
   Δ : Bleeding was slightly observed and the surface area of the bleeding was less than 5%.
   × : Bleeding was considerably observed and the surface area of the bleeding was more than 5%.

### Example 18

Moisture-proof paper was produced including a sandwiched moisture-proof layer in the same manner as in Example 17 except that a penetration proof agent was applied to a face of the paper substrates to be coated with the hot-melt composition and to face of another counterpart paper substrate to be brought into contact with the hot-melt composition before the hot-melt composition is applied to the paper substrates.

As the penetration proof agent, a mixture of 100 parts of a styrene-butadiene latex (made by Asahi Chemical Industry Co., Ltd., 40% concentration) and 100 parts of a heavy calcium carbonate (reagent first grade, average particle size 2 *µ* m) was used and applied by a Meyer bar in 5g/m² thickness.

As in Example 17, the coated surface of the penetration proof layer and the coated surface of the hot-melt composition were well stuck. The moisture permeability and the disaggregation was the same level as in Example 17.

### Examples 19 to 21

Moisture-proof papers were produced in the same manner as in Example 17 except that hot-melt compositions obtained by changing the constituent compositions as in Table 8 were used and the performance was evaluated. As the results being in Table 8, they were excellent in the moisture permeability and the disaggregation.

Meanwhle, the matrials which were not used in Example 17 are as follows:
(A2) amorphous poly (propylene-butene-1): 110°C softening point, 8,000 molecular weight (weight average).
(B2) Terpene-phenol type copolymer resin: 145°C softening point, 1 or lower acid value.
   Calcium carbonate: one used in Example 18

### Comparative Examples 16 to 19

Sandwich-like moisture-proof papers were produced in the same manner as in Example 17 except that hot-melt compositions obtained by changing the constituent compositions as in Table 8 were used. As the results being shown in Table 8, the moisture permeability was poor and the disaggregation was also poor so that they were not suited to the recycling.

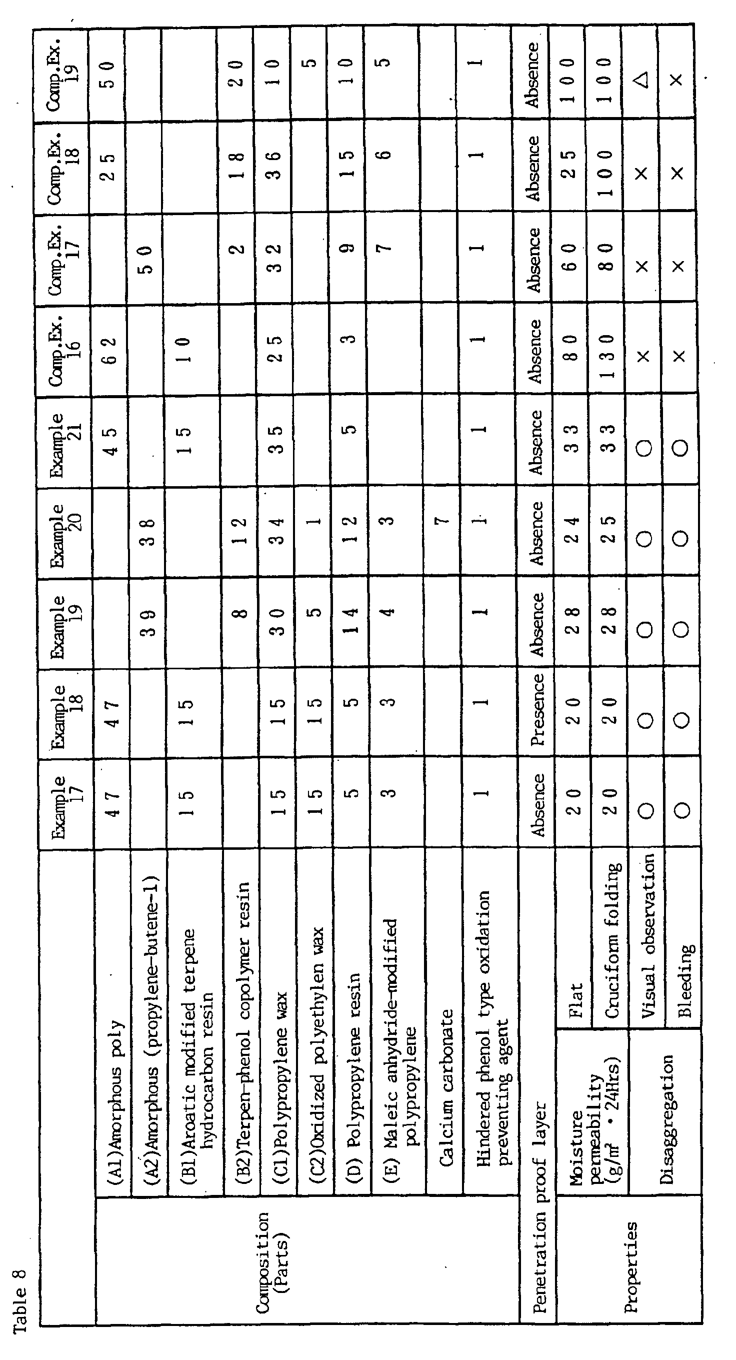

### Indusrial Applicability

As described above, the moisture-proof paper using the hot-melt composition of the present invention has the moisture permeability as excellent as or even more excellent than that of moisture-proof paper coated with a polyolefin type resin and is free of deterioration of the moisture-proofness by folding and bending.

Also, the moisture-proof paper of the present invention has disaggregation and dispersibility in water as excellent as that of emulsion-coated type moisture-proof paper recently, which has recently been proposed and is possible to be recycled, and the moisture-proof paper of the present invention scarcely causes bleeding by heating after paper manufacturing, has a high friction coefficient, requires neither to be coated with a slippage-preventing agent nor a drying process to eliminate probability of curling and is economical in terms of manufacturing facilities and its workability is high.

Further, moisture-proof paper with excellent adhesive property is provided using a hot-melt composition using a specified wax.

Furthermore, moisture-proof paper with excellent slippage resistance and blocking resistance is provided using a hot-melt composition in which the amount of the tackifier is controlled.

Moreover, moisture-proof paper with excellent blocking resistance and printability with an aqueous ink is provided by forming a barrier coat layer on the surface of a moisture-proof layer to prevent substances contained in the moisture-proof layer from transferring therefrom.

The present invention provides remarkably usable moisture-proof paper at low cost as moisture-proof wrapping paper for industrial products and moisture-proof container materials for domestic goods and at the same time contributes to wood resource preservation by recycling and environmental pollution prevention.

## Claims

1. A water-dispersible hot-melt composition comprising components (A) to (E) in 100 parts by weight as the sum of components (A), (B), (C), (D), and (E);
(A) 30 to 55 parts by weight of an amorphous poly (α -olefin),
(B) 3 to 25 parts by weight of a tackifier,
(C) 20 to 45 parts by weight of a wax,
(D) 2 to 20 parts by weight of a polyolefin type resin, and
(E) 0 to 15 parts by weight of a compatibilizing agent.

2. A hot-melt composition as set forth in claim 1, wherein the (A) amorphous poly (α-olefin) is a propylene homopolymer or a propylene-ethylene copolymer.

3. A hot-melt composition as set forth in claim 1, wherein the (B) tackifier is at least one selected from the group consisting of aliphatic hydrocarbon type resins, aromatic hydrocarbon type resins, terpene type resins, and rosin type resins.

4. A hot-melt composition as set forth in claim 1, wherein the (C) wax is a crystalline polyolefin type wax with a softening point of not lower than 105°C .

5. A hot-melt composition as set forth in claim 1, wherein the (C) wax is at least one selected from the group consisting of oxidized waxes and acid-modified waxes.

6. A hot-melt composition as set forth in claim 5, wherein the oxidized wax is at least one selected from the group consisting of oxidized polyethylene waxes, oxidized polypropylene waxes, and oxidized Fischer-Tropsch waxes.

7. A hot-melt composition as set forth in claim 5, wherein the acid-modified wax is at least one selected from the group consisting of acid-modified polyethylene waxes and acid-modified polyethylene waxes.

8. A hot-melt composition as set forth in claim 1, wherein the (D) polyolefin type resin is a polypropylene resin.

9. A hot-melt composition as set forth in claim 1, wherein the (E) compatibilizing agent is a polyolefin type resin grafted with an acid component.

10. A hot-melt composition as set forth in claim 1, wherein the (B) tackifier is added in 3 to 10 parts by weight.

11. A hot-melt composition as set forth in claim 1, wherein the (E) compatibilizing agent is added in 1 to 7 parts by weight.

12. A hot-melt composition as set forth in claim 1, wherein an inorganic filler is added so as to control the specific gravity of the hot-melt composition to be not lower than 1.0.

13. Moisture-proof paper comprising a moisture-proof layer of hot-melt compositions as set forth in any one of claims 1 to 12 formed on either one side of a paper substrate.

14. Moisture-proof paper as set forth in claim 13, wherein a barrier coat layer is formed on the moisture-proof layer of the hot-melt composition.

15. Moisture-proof paper as set forth in any one of claims 1 to 12, wherein the hot-melt composition is inserted between paper substrates of not less than two sheets.

16. Moisture-proof paper as set forth in claim 15, wherein a penetration proof layer is formed on a face of the paper substrates to be coated with the hot-melt composition and/or on a face of another counterpart paper substrate to be brought into contact with the hot-melt composition.

17. A method for producing moisture-proof paper as set forth in claim 13, comprising the step of forming a moisture-proof layer by applying the hot-melt composition as set forth in any one of claims 1 to 12 to at least one side of a paper substrate.

18. A method for producing moisture-proof paper as set forth in claim 14, comprising the steps of forming a moisture-proof layer by applying the hot-melt composition as set forth in any one of claims 1 to 12 to at least one side of a paper substrate and forming a barrier coat layer on the surface of the moisture-proof layer.

19. A method for producing moisture-proof paper as set forth in claim 15, comprising the step of forming a moisture-proof layer by applying the hot-melt composition as set forth in any one of claims of 1 to 12 to at least one face in the inner sides of paper substrates of not less than two sheets.

20. A method for producing moisture-proof paper as set forth in claim 16, comprising the steps of applying a penetration proof agent to a face of the paper substrates to be coated with the hot-melt composition and/or to face of another counterpart paper substrate to be brought into contact with the hot-melt composition before the hot-melt composition is applied to the paper substrates in the producing method of claim 19.
